# EUROPEAN PATENT APPLICATION

(11) **EP 0 749 031 A1**
(43) Date of publication of application: **18.12.1996**
(21) Application number: 95938629.3
(22) Date of filing: 01.12.1995
(51) Int. Cl.: G02F 1/1337, G02F 1/1333

(54) **LIQUID CRYSTAL DISPLAY ELEMENT AND METHOD OF MANUFACTURING THE SAME**

(30) Priority: 01.12.1994 JP 298438/94
(71) Applicant: SEIKO EPSON CORPORATION, Tokyo 163 (JP)
(72) Inventor: YAZAKI, Masayuki, Suwa-shi, Nagano-ken 392 (JP); KOBAYASHI, Hidekazu, Suwa-shi, Nagano-ken 392 (JP); YAMADA, Shuhei, Suwa-shi, Nagano-ken 392 (JP); IISAKA, Hidehito, Suwa-shi, Nagano-ken 392 (JP); TSUCHIYA, Yutaka, Suwa-shi, Nagano-ken 392 (JP); CHINO, Eiji, Suwa-shi, Nagano-ken 392 (JP)
(74) Representative: Hoffmann, Eckart, Dipl.-Ing.
(86) International application number: JP9502462
(87) International publication number: WO9617273

(57) **Abstract**

A reflective pixel electrode (107) made of Cr is provided on the substrate (108) and a transparent pixel electrode (102) made of ITO is provided on the substrate (101). High pre-tilt orientation films (106, 103) formed by rubbing polyimide are respectively provided on both substrates (108, 101). The direction of rubbing is so as to obtain a liquid crystal right-twist of 270°. Polymer dispersed liquid crystal in which liquid crystal (105) and polymer (104) are mutually orientation dispersed is provided between both substrates (108, 101). Liquid crystal is oriented with a large pre-tilt angle relative to both substrates (108, 101). Because the liquid crystal is oriented with large pre-tilt angle, driving voltage drops, response speed of liquid crystal increases, and uneven display is eliminated.

## Description

### FIELD OF THE INVENTION

The present invention relates to a liquid crystal display device and a method for producing the same, and more particularly, to a liquid crystal display device for use as the display component of an information equipment terminal, television or home appliance product, and a method of producing the same.

### BACKGROUND OF RELATED ART

In recent years, as information equipment has become more compact and lightweight, display devices to be mounted on such equipment have been sought that consume less power. TN type liquid crystal display devices are utilized as reflective displays in small display capacity equipment, while FTN type liquid crystal display devices are utilized in mid-range display capacity equipment. Furthermore, uses wherein an information input apparatus, such as a tablet or the like, is included in the reflective-type display are also expanding, and brightness and good visibility are required in reflective-type liquid crystal display devices.

However, because TN type and FTN type liquid crystal display devices that use conventional polarizing plates have low light utilizing efficiency, the problem arises that these devices become dark when made reflective, and moreover, an extremely dark display results when an information input apparatus, such as a tablet or the like, is included. In addition, because a reflective plate is placed over the polarizing plate on the back surface of the substrate on the back side, in order to make a reflective TN type or FTN type model, double images occur in the display, small characters are unclear, and there are problems with visibility.

On the other hand, bright reflective-type displays that do not use polarizing plates have come to be developed recently. For example, a liquid crystal display device that uses a polymer dispersed liquid crystal in which liquid crystal and polymer are dispersed one in the other, and that performs control so that the display is transparent when an electric field is applied, and the light is scattered when no electric field is applied has been disclosed (JP-A-58-501631), and liquid crystal display devices that perform control so that the light is scattered when an electric field is applied and the display is transparent or light is absorbed when no electric field is applied have also been disclosed (EP-A-0 488 116, JP-A-4-227684, JP-A-5-119302).

A polymer dispersed type liquid crystal display device does not use a polarizing plate, which enables production of a bright reflective display. Moreover, because a polarizing plate is not used, a pixel electrode may provide the light reflective surface, in which case a bright reflective display without double images in the display is achieved.

However, the technology of the prior art that has been disclosed is a polymer dispersed type liquid crystal display device using polymer dispersed liquid crystal which, though it resolves problems of a liquid crystal display device using a polarizing plate, creates other problems such as low steepness of electro-optical properties and high driving voltage.

For example, when a polymer dispersed liquid crystal is combined with a simple matrix system, the application is limited to small capacity display equipment because of the low steepness of the electro-optical properties, which makes it difficult to employ a high duty drive. Moreover, a large capacity display is possible by controlling the electric signals by means of active elements such as TFT (thin film transistor) elements and MIM (metal-insulator-metal) elements for each pixel, but the driving voltage of a polymer dispersed liquid crystal with high polymer content is high and driving of the polymer dispersed liquid crystal in such manner that the liquid crystal responds satisfactorily is difficult due to the inability of active elements to withstand the high voltage, which results in a lowering of the contrast ratio and in needing a driver capable of withstanding high voltage.

Moreover, due to the interaction between the liquid crystal and the surface of the polymer, the response speed of the liquid crystal is slow, causing the deterioration of motion picture display quality.

Furthermore, in the technology of the prior art, the pre-tilt condition of the liquid crystal is uneven, and uneven display results by an irregular contrast during operation at an intermediate state (gray scale display), resulting in poor display quality.

Moreover, when a polymer dispersed liquid crystal material is vacuum sealed in the liquid crystal panel, concentration dispersion occurs within the polymer dispersed liquid crystal material, causing uneven hardening. As a result, the problem of uneven display occurs when the panel is operated at gray scale level.

In order to resolve the problems described above, the present invention aims to provide liquid crystal display devices and a production method of liquid crystal display devices which have a high response speed and a low driving voltage, and which are bright and have a high contrast ratio, by controlling the orientation condition of the liquid crystal that is - dispersed orientationally with the polymer, and to further provide a liquid crystal display device and a production method of the liquid crystal display device without an uneven display, suitable for gray scale display.

### Disclosure of invention

In order to resolve the problems described above, the present invention provides a liquid crystal display device comprising two substrates on each of which electrodes with a liquid crystal orientation film thereon are formed, with the liquid crystal and an anisotropic polymer dispersed therein being mutually orientated and interposed between the two substrates, wherein the liquid crystal is oriented with a specific pre-tilt angle relative to the surface of the respective electrode.

In this manner, the driving voltage may be lowered, and the response speed of the liquid crystal may be increased and an uneven display may be eliminated by making the liquid crystal to be oriented with a specific pre-tilt angle relative to the electrode surface in the liquid crystal display device, wherein the liquid crystal and an anisotropic polymer dispersed therein are mutually orientated and held between the two substrates.

The pre-tilt angle of the liquid crystal is preferably 1° through 35°. If the pre-tilt angle exceeds 35°, the reflectance of the panel decreases dramatically, the degree of unevenness of the tilt becomes large, and the electro-optical response becomes uneven, resulting in an uneven display when operated at a gray scale level, even though benefits such as a reduction in driving voltage and high speed response are obtained. On the other hand, if the pre-tilt is less than 1°, the saturation voltage becomes high and response speed becomes slow.

Moreover, the liquid crystal orientation film is preferably formed by rubbing either a polyimide or a polyamide film.

The polyamide or the polyimide preferably contains a fluorine molecule. The polyamide or the polyimide that contains a fluorine molecule gives, with low surface energy, a high tilt to the liquid crystal. The tilt is accomplished with a high level of uniformity, and the chromatic effect is controlled, making it difficult for impurities to be absorbed.

Furthermore, one of the electrodes is preferably formed from a reflective material, hence the present invention is more suitable for reflective liquid crystal display devices than conventional devices.

Moreover, the present invention provides a production method of a liquid crystal display device comprising a step wherein between two substrates on each of which electrodes with a liquid crystal orientation film thereon are formed, a liquid crystal type mixture of a polymer or a polymer precursor and a liquid crystal composite is arranged in such manner that the liquid crystal type mixture is oriented with a specific pre-tilt angle relative to the surface of the respective electrode, and a step to separate the liquid crystal and the polymer by segregating the polymer from the liquid crystal type mixture and to orient the liquid crystal with a specific pre-tilt angle relative to the surface of the electrode.

In this case, the specific pre-tilt angle is preferably 1° through 35°.

### Brief description of drawings

- Fig. 1: is a cross section of a liquid crystal display device according to a first embodiment of the present invention;
- Fig. 2: is a graph illustrating the electro-optical properties of the liquid crystal display device of the first embodiment of the present invention.
- Fig. 3: is a drawing illustrating other electro-optical properties of the liquid crystal display device of the first embodiment of the present invention;
- Fig. 4A: is a drawing illustrating a gray scale display condition of a liquid crystal display device of the second embodiment of the present invention;
- Fig. 4B: is a drawing illustrating a gray scale display condition of a liquid crystal display device of the prior art; and
- Fig. 5: is a cross section of the liquid crystal display device of the third embodiment of the present invention.

### First Embodiment

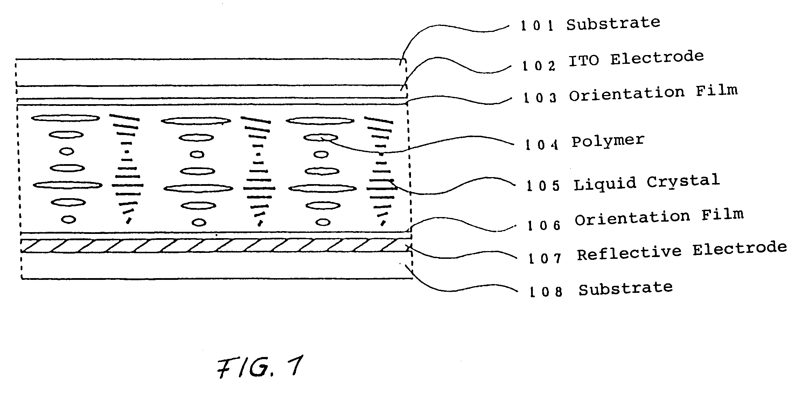

A cross section of the liquid crystal display device of the present embodiment is shown in Figure 1. On the bottom substrate 108, about 2,000 Å (200 nm) of chrome was formed by sputtering, after which it was patterned to form a reflective pixel electrode 107. On the top substrate 101, about 1,500 Å (150nm) of ITO (Indium Tin Oxide) was formed by sputtering, after which it was patterned to form transparent pixel electrode 102. On both substrates 108 and 101, a polyimide layer was formed as a liquid crystal orientation film from which orientation films 106 and 103 were formed respectively by means of a rubbing process. Orientation films 106 and 103 were made to be high pre-tilt orientation films, which will be explained later. The two substrates were fixed to each other by pasting along the perimeters of the substrates leaving a gap of 5µm between the substrates to form a hollow panel. Here, the direction of rubbing was set at a liquid crystal right twist of 270°.

Next, the liquid crystal and polymer precursor mixture to be sealed between substrate 108 and substrate 101 will be described. For the liquid crystal, TL-202 (Merck & Co. Inc) and MJ92786 (Merck & Co. Inc) were mixed with a weight ratio of 7:3 (hereafter referred to as liquid crystal A). To the liquid crystal A, 0.5 weight percent of R1011 (Merck & Co. Inc) was added as a chiral agent, and 1.4 weight percent, 1.7 weight percent and 0.4 weight percent, respectively, of M361, S1512 and M137 (all are made by Mitsui Toatsu Senryo K. K.) were added as a dichroic dye. In addition, 7 weight percent of biphenyl acrylate, with respect to the above liquid crystal mixture, was used as the polymer precursor. The above was heated and mixed to achieve a liquid crystal state, after which it was vacuum sealed in the above-described hollow panel.

The liquid crystal mixture vacuum sealed in the panel had an orientation condition of a right twist of 270° from the rubbing axis of the top substrate 101 to that of the bottom substrate 108. The liquid crystal display device of the present embodiment shown in Figure 1 was completed by polymerizing the polymer precursor with 7 minutes of ultra-violet ray irradiation of 5mW/cm² (wave length 350 nm) and segregating the polymer from the liquid crystal while maintaining the panel at 50°C. After that the liquid crystal exhibited the same orientation condition as before the ultra-violet ray irradiation, that is, an orientation condition of a right twist of 270° from the rubbing axis of the top substrate 101 to the rubbing axis of the bottom substrate 108, and had a structure in which the polymer 104 was dispersed in the liquid crystal 105 and they were mutually oriented between the substrates.

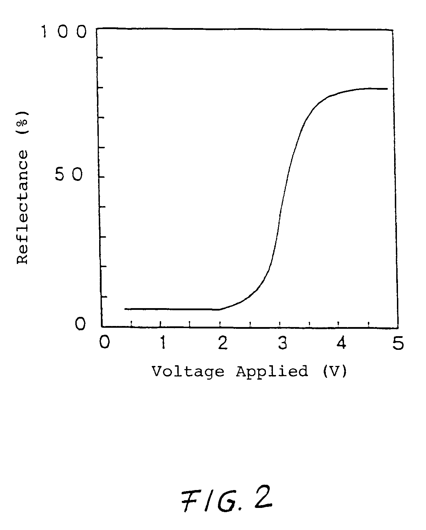

Figure 2 illustrates the electro-optical properties of the liquid crystal display device obtained in the present embodiment. The electro-optical properties exhibited threshold properties, and a normally black characteristic was obtained wherein the reflectance increased with the voltage being applied. That is to say, when the voltage was off, a black display was obtained through the absorption by the dichroic dye, and when a sufficient voltage was applied, the liquid crystal 105 was oriented in the direction of the electric field, and consequently, the orientation directions of the polymer and the liquid crystal differed, and points of discontinuity were created in the refractive index in the medium, so that a light scattering state was achieved. At this time, the absorption was extremely small because the dichroic dye was also oriented in the direction of the electric field, so a white display was obtained.

Next, the high pre-tilt orientation film used in the liquid crystal display device of the present embodiment and the electro-optical properties obtained will be described. Table 1 lists the relationship between the orientation film, pre-tilt angle and the electro-optical properties of the liquid crystal display element obtained.

**Table 1**

| | Orientation Film | | | |
|---|---|---|---|---|
| Properties | A | B | C | Comparative |
| Pre-tilt angle (°) | 8 | 15 | 25 | 0.8 |
| V10 (V) | 2.9 | 2.4 | 1.9 | 3.6 |
| V90 (V) | 4.3 | 3.7 | 3.2 | 6.1 |
| Rising speed (ms) | 14 | 12 | 10 | 26 |
| Falling speed (ms) | 15 | 15 | 14 | 20 |
| Maximum Reflectance (%) | 82 | 80 | 77 | 83 |

For the orientation film A, CRD-8441 from Sumitomo Bakelite Co. was used, for the orientation film B, CRD-8409 from Sumitomo Bakelite was used, and for the orientation film C CRD-8409 was also used but the rubbing density was made smaller than that of orientation film B. Moreover, as the comparative orientation film, Optomer AL1254 from Japan Synthetic Rubber Co. Ltd. was used. Here, the pre-tilt angle was measured using the crystal rotation method. Moreover, the electro-optical properties were measured using a xenon lamp ring light source to apply a 100 Hz rectangular wave to the liquid crystal display device and to illuminate light from an inclination angle of 30° with respect to the normal direction to the surface of the liquid crystal display device, on all sides (360°), and detecting the reflected light in the normal direction as the response to the incident light. The reflectance of the standard diffusion plate is taken as standard of 100%. Hereafter, the threshold voltage value V10 means the voltage value at which the panel shows a reflectivity of 10% when the difference between a maximum and a minimum reflectance of the panel is taken as 100%, and the threshold voltage value V90 means the voltage value at which the panel shows a reflectivity of 90%. The response speed is obtained by measuring the rising speed and falling speed of the liquid crystal response between voltages of V10 and V90.

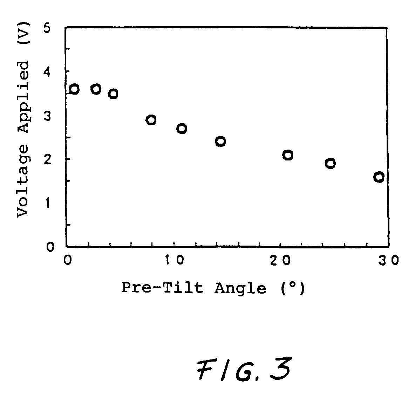

Moreover, Figure 3 illustrates the correlation between the pre-tilt angle and the threshold voltage V10 when the pre-tilt angle of liquid crystal A is changed by means of the material of the orientation film and the rubbing density using Optomer AL3046 by Japan Synthetic Rubber Co. Ltd., CRD-8441 by Sumitomo Bakelite Co., and CRD-8409 by Sumitomo Bakelite Co.

In the liquid crystal display device of the present embodiment, due to the tilt structure of liquid crystal molecules, the driving voltage drops substantially with an increase in pre-tilt, resulting in an increase in response speed, particularly the rising speed. Moreover, the maximum reflectance, that becomes an index for brightness, is favorable and a bright liquid crystal display device is obtained. Furthermore, in the liquid crystal display device of the present embodiment, an uneven display at a gray scale level caused by uneven tilt is not detected and gray scale display capability is improved.

### Second Embodiment

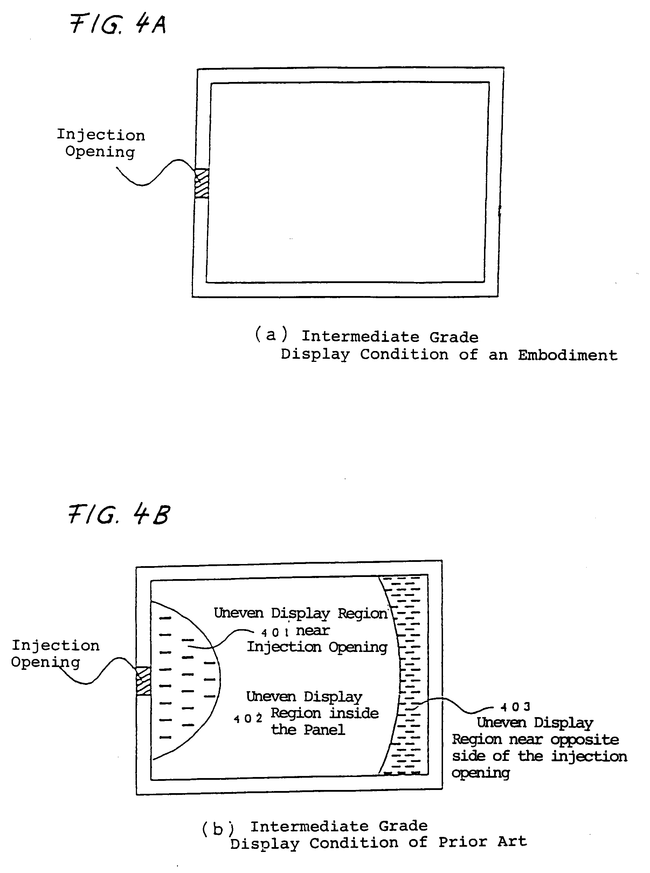

In this embodiment, a model in which a high pre-tilt orientation film made of a polyimide containing a fluorine radical will be described. CRD-8409 by Sumitomo Bakelite Co. was used as the fluorine polyimide orientation film and a liquid crystal panel was produced in a manner similar to that of the first embodiment. The panel size, measured diagonally of the display unit, was 5 inches. Next, voltage V50, corresponding to a reflectance of 50% as defined in the first embodiment, was applied to the completed liquid crystal panel and gray scale display performed. The display results are shown in Figure 4A. In the present embodiment, unevenness was not found during gray scale display and uniform display results were obtained. On the other hand, with a conventional technology in which twist orientation and tilt orientation are not implemented, a boundary of uneven display is clearly detected at the neighborhood of liquid crystal pouring opening 401, inside of the panel 402 and at the opposite side of the liquid crystal pouring opening 403 during gray scale display, as shown in Figure 4B.

Here, only one type of orientation film has been described as an example in the present embodiment, but a polyimide or a polyamide with a fluorine molecule has a low orientation film surface energy which reduces a chromatic effect and also reduces an adsorption of impurities to the orientation film, and 3 - 30° of liquid crystal pre-tilt angle may be used as well.

### Third Embodiment

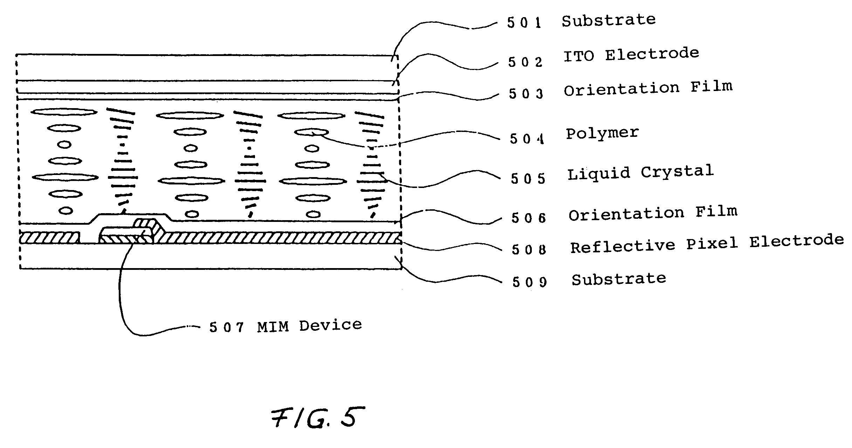

In this embodiment, a model in which a 2-terminal device (MIM) is formed for each pixel electrode and which uses a high pre-tilt orientation film made of polyimide with a fluorine molecule will be described. Figure 5 shows a cross section of the liquid crystal display device of the present invention. The bottom substrate 509 is an MIM substrate made by means of two photo processes. The substrate production process consists of sputtering Ta, patterning to a desired pattern (first photo process), anodic oxidation of Ta and formation of an insulation film of Ta₂O₅ on the Ta surface, followed by sputtering of Cr, patterning to a desired pattern (second photo process), thereby forming an MIM device 507 composed of Ta-Ta₂O₅-Cr, and a reflective pixel electrode 508 made of Cr. On the other hand, for the top substrate 501, ITO (Indium Tin Oxide) was sputtered and then patterned into a stripe shape to form an ITO electrode 502. Next, CRD-8409 made by Sumitomo Bakelite Co. was spin coated on both substrates, which were then baked for one hour at 250°, and processed with rotation rubbing to form orientation films 503 and 506, respectively. The orientation films 503 and 506 were high pre-tilt orientation films made of polyimide containing a fluorine molecule. The two substrates thus obtained, were made into a hollow panel of a diagonal length of 5 inches by pasting and fixing along the perimeter of the substrates leaving a gap of 5µm between the substrates. Here, the rubbing direction was set at a liquid crystal right-twist of 270°.

Then, a liquid crystal mixture made of liquid crystal, dichroic dye, chiral agent and polymer precursor, the same as in the first embodiment, was vacuum injected into the hollow panel. The liquid crystal mixture sealed in the panel had an orientation condition of a right-twist 270° from the rubbing axis of the top substrate 501 to the rubbing axis of the bottom substrate 509, as with the first embodiment. Next, ultra-violet rays of 5mW/cm₂ (wave length 350nm) were irradiated for 7 minutes while maintaining the panel at 50° to segregate polymer from the liquid crystal, and the liquid crystal display device shown in Figure 5 was completed.

When a liquid crystal display device thus produced is driven at 1/480 duty, the maximum reflectance is 65% and the contrast is 12 under the same measurement condition as in the first embodiment. Moreover, a uniform panel without uneven display at a gray scale level is obtained. Furthermore, when the surface of the liquid crystal display device is anti-glare treated and anti-reflection coated, specular reflections of the surroundings are reduced and the visibility improves dramatically. Moreover, a device with a high response speed suitable for motion picture is obtained in the present embodiment.

Here in the present embodiment, one type of MIM device is used as a two-terminal non-linear device but a lateral MIM device, back-to-back MIM device, an MSI device, a diode ring device, or a varistor device may be used equally well instead of the MIM device described. Moreover, a 3-terminal non-linear device, such as a polysilicon TFT device, an amorphous silicon TFT device and a Cd-SeTFT device, may be used as well.

Moreover, the reflective electrode is arranged on the MIM substrate in the present embodiment, but it is also possible to form a reflective electrode on the opposing substrate instead.

This concludes the description of the embodiments of the present invention, but the present invention is not limited to the above embodiments.

For example, in the first through the third embodiments, a dichroic dye was added to the liquid crystal but it is not necessary to add the dye. If the dye is not added, the black level increases slightly when voltage is not applied, but the absorption of the dye is eliminated when voltage is applied, so the maximum reflectance increases and brightness improves. Also, when low-reflectance, reflective electrodes are used, or when a light absorption layer is placed on the reflective electrodes, there is no particular necessity to add a dichroic dye. Moreover, the black level or brightness may be adjusted by the aperture ratio of the panel.

Moreover, a specific orientation film is used in the first through the third embodiments above, but the orientation film is not limited to that used in the embodiments. If the pre-tilt angle exceeds 35°, the maximum reflectance decreases sharply, the degree of unevenness of tilt becomes large, and the electro-optical response becomes uneven, resulting in an uneven display at gray scale levels, even though benefits such as a reduction in driving voltage and high speed response are obtained. On the other hand, if an orientation film resulting in a pre-tilt of nearly 0° is used, the saturation voltage becomes high and the response speed becomes slow. Hence, the liquid crystal pre-tilt angle is preferred to be 1 - 35°, more preferably 3 - 30°, and even more preferably 4 - 15°. Use of a polyimide or a polyamide is preferred to obtain such a high tilt. Particularly, the use of a polyimide or a polyamide with a fluorine molecule is preferred since it gives a high tilt with low surface energy, a high level of tilt evenness, and a controlled chromatic effect. Here, in the first through the third embodiments, the twist angle is 270°, but another angle may be used as well. The appropriate angle may be established freely as long as the steepness of the electro-optical response and the driving voltage are taken into consideration.

As to the materials for the substrates, soda glass, quartz, non-alkali glass, monocrystalline silicon, sapphire, a thermosetting polymer, a thermoplastic polymer, or the like may be suitably used. The polymer material used for the substrates is not particularly limited as long as it does not have a negative effect on the liquid crystal and polymer contained between the substrates, and PET, polyethyl sulfone, epoxy hardening resin, phenoxy resin, polyallyl ether or the like may be suitably used.

The reflective electrodes are Cr in the first through third embodiment, but a metal such as Al, Cr, Mg, Ag, Au, Pt or the like, or alloys of these may be effectively used. In particular, Cr or an Al-Mg alloy are preferable from the standpoint of stability and reflectance, and in the case of the Al-Mg alloy, it is desirable that Mg be added in the amount of 0.1 to 10% by weight.

For the liquid crystal, what is normally used in liquid crystal display devices may be effectively used, but in order to improve the degree of scattering, it is desirable that the refractive index anisotropy Δn of the liquid crystal is equal to or greater than 0.15. Also, in order to drive a liquid crystal panel by non-linear devices like MIM or TFT, it is desirable that the specific resistivity values of the liquid crystal alone be equal to or greater than 1.0 x 10⁹ Ω·cm, and more preferably, equal to or greater than 1.0 x 10¹⁰ Ω·cm in order to increase the retention rate and improve the display quality.

A chiral component may or may not be added, but it is preferable to add the optimum amount to obtain a specific liquid crystal twist angle, which will improve the stability of orientation, the steepness of the electro-optical response and the degree of scattering. As the chiral agent, a material used for normal TN and STN type display devices may be used without modification. The amount to be added may be no more than 10 weight percent of the liquid crystal material, preferably no more than 5 weight percent, and the twist angle is preferably no more than 2 d/p (cell thickness/liquid crystal helical pitch). If the amount is equal to or more than 10 weight percent, the driving voltage becomes high and driving becomes impossible with a normal non-linear device. Moreover, hysteresis occurs in the electro-optical response.

As the dichroic dye, it is preferable to use azo, anthraquinone, naphthoquinone, perylene, quinophthalone, azomethyn or the like that are normally used in the GH (guest-host) type display devices. Of these, in terms of light resistance, it is particularly preferable to use anthraquinone alone or a mixture of this with another dye, as necessary. These dichroic dyes may be mixed depending on the color needed.

As the polymer precursors, any material can be used, as long as it exhibits refractive index anisotropy after polymerization and disperses in the liquid crystal, but from the standpoint of simplicity in the liquid crystal display device manufacture, it is desirable to use an ultraviolet cured type monomer. For the ultraviolet cured type monomer, a monofunctional methacrylate, bifunctional methacrylate or multifunctional methacrylate are preferably used. To improve the degree of scattering, it is desirable to include at least one benzene ring in the polymer structure of these monomers. In particular, materials containing biphenyl, terphenyl or quarterphenyl lattice are desirable. These monomers may also contain a chiral component. Also, it is possible to irradiate these monomers with ultraviolet rays and polymerize them either alone or after mixing with other monomers.

### Industrial Applications

As explained above, the present invention provides a bright polymer dispersed type liquid crystal display device in which a polarizing plate is unnecessary and double images are eliminated and that implements a simple structure with a high pre-tilt orientation to resolve problems related to driving voltage, response speed and uneven display at a gray scale display.

In particular, the driving voltage of the liquid crystal display device of the present invention is reduced to the level of TN type display devices; hence, the liquid crystal display device is sufficiently driven with a MIM device and a TFT device, resulting in substantial improvement in brightness and contrast. Moreover, use of a high voltage-resistant driver is no longer necessary, making it possible to hold down the power consumption and the cost. Hence the present invention can provide a bright polymer dispersed type liquid crystal display device with high level of contrast, low power consumption and low cost.

Moreover, the liquid crystal display device of the present invention achieves high speed response and improves the motion picture display function, the screen scrolling function and the mouse response function. Furthermore, thanks to the improvement in the uniformity of the gray scale display, multi-gradation display becomes possible. Hence, the present invention is able to provide a polymer dispersed type liquid crystal display device with high speed response and that is capable of multi-gradation display.

As explained above, the present invention is able to provide an excellent quality, reflective, large capacity display with small power consumption by means of an active matrix drive.

## Claims

1. A liquid crystal display device comprising two substrates on each of which an electrode with a liquid crystal orientation film thereon is formed, a liquid crystal and an anisotropic polymer dispersed therein and mutually orientated are interposed between the two substrates, wherein the liquid crystal is oriented with a specific pre-tilt angle relative to the surface of the respective electrode.

2. A liquid crystal display device of Claim 1 wherein the pre-tilt angle of the liquid crystal is 1° through 35°.

3. A liquid crystal display device of Claim 1 wherein the liquid crystal orientation film from polyimide or polyamide that has undergone a rubbing treatment.

4. A liquid crystal display device of Claim 3 wherein the polyimide or the polyamide contains a fluorine molecule.

5. A liquid crystal display device of Claim 1 wherein one of the electrodes is formed from a reflective material.

6. A production method of a liquid crystal display device comprising; a step wherein between two substrates on each of which an electrode with a liquid crystal orientation film thereon is formed, a liquid crystal type mixture of a polymer or polymer precursor and a liquid crystal composite is arranged in such manner that the liquid crystal type mixture is oriented with a specific pre-tilt angle relative to the surface of the respective electrode, and a step to separate the liquid crystal and the polymer by segregating polymer from the liquid crystal type mixture and to orient the liquid crystal with the specific pre-tilt angle relative to the surface of the electrode.

7. A production method of a liquid crystal display device of Claim 6 wherein the specific pre-tilt angle is 1° through 35°.
